# EUROPÄISCHE PATENTSCHRIFT

(11) **EP 2 494 645 B1**
(45) Veröffentlichungstag und Bekanntmachung des Hinweises auf die Patenterteilung: **16.12.2015**
(21) Anmeldenummer: 10774175.3
(22) Anmeldetag: 25.10.2010
(51) Int. Cl.: H01M 8/04, B01D 53/26, B64D 37/32, B64D 41/00

(54) **Brennstoffzellensystem und Verfahren zum Trocknen von Abgas eines Brennstoffzellensystems**
Fuel cell system and method for drying exhaust gas of a fuel cell system
Système de cellules électrochimiques et procédé de séchage de gaz émis par un système de cellules électrochimiques

(30) Priorität: 29.10.2009 DE 102009051212; 29.10.2009 US 256015 P
(43) Veröffentlichungstag der Anmeldung: 05.09.2012
(73) Patentinhaber: Airbus Operations GmbH, 21129 Hamburg (DE)
(72) Erfinder: MOCK, Sebastian, 22761 Hamburg (DE); LAUCKNER, Johannes, 21029 Hamburg (DE); STOLTE, Ralf-Henning, 22525 Hamburg (DE)
(74) Vertreter: Maiwald Patentanwalts GmbH
(86) Internationale Anmeldenummer: PCT/EP2010/066034
(87) Internationale Veröffentlichungsnummer: WO 2011/051210

(56) Entgegenhaltungen:
- JP-A- 2 266 198
- US-A1- 2002 112 479
- US-A1- 2004 028 966
- US-A1- 2008 070 078

## Beschreibung

### VERWANDTE ANMELDUNGEN:

Die vorliegende Anmeldung beansprucht die Priorität der deutschen Patentanmeldung Nr. 10 2009 051 212.8, eingereicht am 29. Oktober 2009 und der US-Provisional Patentanmeldung Nr. 61/256,015, eingereicht am 29. Oktober 2009.

### TECHNISCHES GEBIET:

Die Erfindung betrifft ein Brennstoffzellensystem mit einer Vorrichtung zum Trocknen von Abgasen des Brennstoffzellensystems, ein Verfahren zum Trocknen von Abgasen eines Brennstoffzellensystems und ein Flugzeug mit mindestens einem derartigen Brennstoffzellensystem.

### HINTERGRUND DER ERFINDUNG:

Für moderne Verkehrsflugzeuge werden vereinzelt Brennstoffzellensysteme zur Bewältigung vielfältiger Aufgaben konzipiert oder bereits eingesetzt. Neben der Erzeugung von Elektrizität können auch andere Aufgaben erfüllt werden, wie etwa die Inertisierung eines Kraftstofftanks durch Einleiten des Abgases eines Brennstoffzellensystems. Das Abgas weist aufgrund der Arbeitsweise einer Brennstoffzelle üblicherweise einen Wasserdampfgehalt auf. Generell besteht bei einer Verwendung von feuchten Gasen zur Inertisierung eines Kraftstofftanks die Problematik, dass Treibstoffe, insbesondere Kerosin, hygroskopisch sind. Weiterhin besteht die Gefahr, dass sich außerdem in dem Tank eine Bakterienpopulation bilden kann, die Sensoren zum Erfassen des Füllzustandes des Tanks beeinflussen könnte, so dass die Erfassung unpräzise wird. Zudem könnten innerhalb des Kraftstofftanks bzw. des Kraftstoffs selbst Eiskristalle entstehen, die zu Beschädigungen an Triebwerks-Einspritzdüsen und Kraftstofffiltern führen könnten, wenn sich das Flugzeug im Reiseflug oder bei Temperaturen unterhalb des Gefrierpunkts am Boden befindet. Es besteht demnach der Bedarf, trockene Gase in den Kraftstofftank einzuleiten, um eine Inertisierung des Kraftstofftanks durchführen zu können.

DE 10 2005 054 885 A1 und US 2007/0111060 A1 zeigen ein Sicherheitssystem zur Verminderung der Explosionsgefahr eines Treibstofftanks, bei der eine Schutzgaserzeugungseinrichtung ein Brennstoffzellensystem mit einer Brennstoffzelle umfasst und ein im Betrieb des Brennstoffzellensystems von der Brennstoffzelle erzeugtes Schutzgas bereitstellt.

US 2004/028966 A1 zeigt ein Flugzeug mit einem Brennstoffzellensystem, dessen Abgase durch einen mit Außenluft beaufschlagten Wärmetauscher fließen, in dem sie unter den Gefrierpunkt von Wasser gekühlt werden. Das sich im Wärmetauscher sammelnde Eis wird in einer späteren Betriebsphase geschmolzen und abgeführt.

Im Stand der Technik sind verschiedene Verfahren und Systeme bekannt, die zum Trocknen von Gasen, insbesondere Luft, Verwendung finden. So wäre es beispielsweise möglich, eine Adsorption durch hygroskopische Medien durchzuführen, beispielsweise Silica-Gel. Allerdings ist die Wasseraufnahmekapazität eines hygroskopischen Mediums endlich, so dass es nach Gebrauch entweder ersetzt oder regeneriert werden müsste. Das Ersetzen führt insbesondere in einem Flugzeug zu ausgeprägten Gewichtsproblemen und das stete Entleeren und Nachfüllen zu einem erhöhten Wartungsaufwand. Weiterhin wäre eine Regeneration durch einen entsprechenden Wärmeeintrag möglich, beispielsweise durch erwärmte Luft. Dies würde allerdings die Effektivität des Brennstoffzellensystems in Frage stellen, da zur thermischen Regeneration ein beträchtlicher Energieaufwand notwendig wäre. Falls keine Regeneration durchgeführt werden soll, ist aufgrund der genannten Sättigung eine Abgastrocknung nur für eine begrenzte Dauer möglich. Generell werden bei derartigen Verfahren Taupunkte, d. h. Temperaturen, bei denen ein Gleichgewichtszustand von kondensierendem und verdunstendem Wasser besteht, erreicht, die bis weit in den zweistelligen negativen Bereich reichen.

Ein weiteres Verfahren zum Trocknen von Luft erfolgt durch Wassertransfer mittels einer selektiven Membran unter Ausnutzung einer Partialdruckdifferenz. Hierzu würde eine Membran eingesetzt werden, die ein zu trocknendes Gas von einem trockenen Gas trennt, wobei aufgrund einer Partialdruckdifferenz ein Durchtritt von Wasser durch die Membran verursacht wird. Alternativ zu dem trockenen Gas könnte auch der statische Druck auf der Membranseite erhöht werden, auf der sich das zu trocknende Gas befindet. Dieses Verfahren wird durch die erzielbare Partialdruckdifferenz in seiner Trocknungsleistung begrenzt. Besonders niedrige Taupunkte eines Membran-Drucklufttrockners werden nur unter Einsatz eines recht hohen Betriebsdrucks und einer damit notwendigen hohen Kompressorleistung erreicht.

Ein weiteres, drittes Verfahren aus dem Stand der Technik zum Trocknen von Gasen würde durch Abkühlung des Gases unter den Taupunkt erfolgen, wofür im Grunde lediglich ein Wärmetauscher und eine Wärmesenke bzw. ein Kühlmedium benötigt werden. Im Anschluss an die Abkühlung und für die abschließende Trennung von flüssigem Wasser und gasförmigem Restgas könnte ein Tropfenfänger oder dergleichen verwendet werden. Dieses Prinzip erfordert allerdings eine recht hohe Kühlleistung, da flüssiges Produktwasser vorliegt und die bei dem Phasenübergang freiwerdende Energie abgeführt werden muss. Die zur Abkühlung des Gases eingesetzte Kälte kann zum Teil in einem anschließenden rekuperativen Wärmetauscher zurückerhalten werden. Grundsätzlich ist der erreichbare Taupunkt hierbei begrenzt durch den Gefrierpunkt, da innerhalb des Wärmetauschers auftretende Vereisung bei der heute üblichen Bauweise zum Blockieren von Gaskanälen führen kann.

### ZUSAMMENFASSUNG DER ERFINDUNG

Dementsprechend kann als Aufgabe der Erfindung angesehen werden, ein System zum Kühlen des Abgases eines Brennstoffzellensystems vorzuschlagen, das die vorangehend geschilderten Nachteile verringert oder gänzlich eliminiert.

Insbesondere kann als Aufgabe der Erfindung angesehen werden, ein System zum Trocknen von Abgas eines Brennstoffzellensystems vorzuschlagen, das mit einer möglichst geringen Energie eine möglichst effektive Trocknung des Abgases ermöglicht, ohne die Komplexität des Brennstoffzellensystems oder dessen Peripherie deutlich zu steigern, bei gleichzeitiger Minimierung des zusätzlichen Gewichts.

Die Aufgabe könnte durch ein Brennstoffzellensystem mit einer Vorrichtung zum Trocknen von Abgas des Brennstoffzellensystem gemäß dem unabhängigen Anspruch 1 gelöst werden. Vorteilhafte Weiterbildungen sind den Unteransprüchen zu entnehmen.

Gemäß einem ersten Aspekt der Erfindung weist die Vorrichtung zum Trocknen des Abgases mindestens einen Kühlkörper mit mindestens einer ersten Fläche sowie mindestens eine Ablöseeinrichtung auf.

Der Kühlkörper ist dazu eingerichtet, mit einer Wärmesenke thermisch verbunden zu werden und mit an der ersten Fläche vorbeistreichendem Gas in Berührung zu gelangen. Dies bedeutet konkret, dass ein beliebig geformter Kühlkörper auf eine beliebige Art mit einer Wärmesenke verbunden werden kann, um eine Kühlung zu erfahren. Das Verbinden mit der Wärmesenke kann dabei auf völlig unterschiedliche Arten realisiert werden. So könnte etwa ein Kühlkreislauf vorgesehen werden, der ein Kältemittel als Wärmesenke durch den Kühlkörper leitet, so dass Wärme von dem Kühlkörper an das Kältemittel abgegeben wird. Gleichzeitig könnte der Kühlkörper auch dazu eingerichtet sein, eine mechanische Verbindung mit einem Peltier-Element oder dergleichen als Wärmesenke einzugehen, so dass durch den Kontakt mit einer kalten Seite eines Peltier-Elements eine Wärmeabgabe von dem Kühlkörper an das Peltier-Element und damit eine Kühlung erfolgen kann. Weiterhin könnte es auch möglich sein, ein kaltes Fluid als Wärmesenke aus einer beliebigen Quelle auf eine beliebige Art mit dem Kühlkörper in Verbindung zu bringen, so dass durch die niedrige Temperatur des Fluids eine Kühlung des Kühlkörpers erfolgt. Hierbei könnte etwa besonders kalte Umgebungsluft aus der Umgebung eines Flugzeugs in der Reiseflugphase in Betracht kommen, die entweder direkt oder über einen in Form eines Außenhautkühlers realisierten Wärmetauscher eingesetzt werden kann. Gleichermaßen kommt als Wärmesenke die Verwendung flüssigen Wasserstoffs aus einem kryogenen Tank in Betracht, der als Brennstoff für die Brennstoffzelle eingesetzt wird. Zum Betrieb einer Brennstoffzelle ist ohnehin erforderlich, den Wasserstoff aus seiner flüssigen Form in eine gasförmige Form zu bringen, so dass ein Wärmeeintrag vorteilhaft sein könnte.

Der Vorteil eines derartigen Kühlkörpers liegt darin, dass der Wasser- oder Wasserdampfanteil eines an der ersten Fläche des Kühlkörpers vorbeistreichenden Gases gefriert und sich an der ersten Fläche ansammelt. Bei einer ausreichend kalten Temperatur des Kühlkörpers unterhalb des Gefrierpunktes und einer ausreichenden Beaufschlagung der ersten Fläche mit dem zu trocknenden Gas ist eine ausreichende Trocknung des Gases möglich.

Die genannte Ablöseeinrichtung ist relativ zu der ersten Fläche des Kühlkörpers bewegbar gelagert und dazu eingerichtet, das auf der ersten Fläche gefrorene Wasser wieder abzulösen, so dass keine übermäßige Ansammlung von Eis erfolgt. Dieser Aspekt der Erfindung ist nicht auf eine bestimmte Art einer Ablöseeinrichtung beschränkt, sondern es kommen auch hier jegliche denkbaren Ablöseeinrichtungen in Betracht. Es können sowohl mechanische Ablöseelemente realisiert sein, die mit Schabeelementen, Schabekanten oder dergleichen mit der ersten Fläche in Eingriff stehen und mechanisch Eis von der ersten Fläche ablösen.

Die spezifischen Nachteile der im Stand der Technik bekannten Vorrichtungen können durch die in dem erfindungsgemäßen Brennstoffzellensystem enthaltene Vorrichtung zum Trocknen überwunden werden. Der besondere Vorteil der Verwendung einer mechanischen Ablöseeinrichtung liegt darin, dass keine Sättigungseffekte eintreten. Es sind weiterhin keine speziellen Stoffe der Vorrichtung zuzuführen, die ein Ablösen von Eis oder ein Trocknen des Gases erlauben. Weiterhin ist von einer kompakten Bauweise auszugehen.

In einer vorteilhaften Weiterbildung weist die Ablöseeinrichtung eine Kante auf, die dazu eingerichtet ist, Eis von der ersten Fläche des Kühlkörpers abzuschaben. Die Kante ist daher bevorzugt so auszubilden, dass ihre Form mit der Form der ersten Fläche korrespondiert. Ist die erste Fläche etwa eine ebene, gerade Fläche, könnte eine ebene und geradlinige Kante dazu verwendet werden, Eis von der ersten Fläche abzuschaben. Dadurch wird die Menge an akkumuliertem Eis an der ersten Fläche stets begrenzt. Dadurch wird eine kontinuierliche ausreichende Wärmeabfuhr zum Vereisen von Wasserdampf des Gases möglich.

Gemäß einer ebenso vorteilhaften Weiterbildung ist der Kühlkörper ein Hohlkörper, wobei die erste Fläche eine Innenfläche des Kühlkörpers ist. Dadurch wird besonders das Einführen und Durchleiten des Gases vereinfacht, da der Kühlkörper durch seine hohle Form praktisch eine Luftleitung darstellen könnte. Durch das thermische Verbinden des Kühlkörpers mit einer Wärmesenke sammelt sich an der Innenfläche des Kühlkörpers Eis an und kann kontinuierlich, sukzessive oder alternierend abgeschabt werden.

Ebenso vorteilhaft ist das konkrete Ausführen des Kühlkörpers als zumindest abschnittsweise hohlzylinderförmiger Körper, da diese Variante besonders leicht zu fertigen ist und somit die Kosten für die Herstellung der Vorrichtung auf ein niedriges Niveau senken kann.

Bei der Verwendung eines hohlen Kühlkörpers, besonders bei einer zumindest abschnittsweise hohlzylinderförmigen Gestaltung, bietet es sich in einer vorteilhaften Weiterbildung an, eine spindelförmige Ablöseeinrichtung zu verwenden, deren äußere Spindelkanten mit der Innenfläche des Kühlkörpers in Berührung stehen. Die spindelförmige Ablöseeinrichtung ist bevorzugt auf eine Achse rotierbar zu lagern, die der Erstreckungsachse des Kühlkörpers entspricht. Durch diese konzentrische, symmetrische Gestaltung wird an der gesamten Innenfläche ein gleichmäßiges Abschaben erlaubt. Durch kontinuierliches Drehen dieser spindelförmigen Ablöseeinrichtung, die etwa eine helixförmige Schabekante aufweisen könnte, wird kontinuierlich an der Innenfläche des Kühlkörper Eis abgeschabt, so dass je nach Steigung und Anzahl der Wendeln der Ablöseeinrichtung das Eis unmittelbar nach dessen Ansammlung an der Innenfläche des Kühlkörpers entfernt wird.

Besonders vorteilhaft ist der Kühlkörper von einem weiteren Körper umschlossen, der an seiner Innenseite einen Spalt zum Kühlkörper ausbildet. Durch einen derartigen Spalt könnte ein Kältemittel eintreten, das zum Abkühlen des Kühlkörpers führt. Die Temperatur des einströmenden Kältemittels oder dergleichen sollte eine Temperatur aufweisen, die ausreichend niedriger als 0°C ist. Die Erfindung ist hierbei nicht auf eine bestimmte Art von Kältemittel beschränkt, sondern es könnte eine Reihe von unterschiedlichen Kältemitteln verwendet werden. Es kämen sowohl flüssige als auch gasförmige Kältemittel in Betracht, wobei bei der Verwendung in einem Flugzeug auch Umgebungsluft aus einem Staulufteinlass oder dergleichen als Kältemittel zumindest im Reiseflug geeignet sein könnte.

Gemäß einer ebenso vorteilhaften Weiterbildung ist ein hohlförmiger Kühlkörper an mindestens einem Ende mit einer sich aufweitenden Form ausgestattet, so dass das Einleiten des zu trocknenden Gases und/oder das Ausleiten des abgelösten Eises erleichtert wird. Die sich aufweitende Form könnte beispielsweise trichter- oder trompetenförmig gestaltet sein und könnte als Reservoir für Eis oder Schmelzwasser dienen.

In einem sich aufweitenden Bereich eines hohlen Kühlkörpers könnte eine Öffnung angeordnet sein, durch die das abgelöste Eis bzw. von der eisförmigen Phase durch Wärmeinwirkung von außen gewonnenes Schmelzwasser abgeführt werden kann. Die Wärmeeinwirkung kann dabei durch das einströmende Gas realisiert sein. Bevorzugt ist dabei der Kühlkörper derart positioniert, dass ein Vermischen des ausströmenden Gases mit dem abzuführenden Wasser vermieden werden kann. Die Vorrichtung könnte durch horizontale Lagerung dies beispielsweise verhindern, da akkumuliertes Eis bzw. akkumuliertes Schmelzwasser senkrecht zur Strömungsrichtung des Gases ausfallen bzw. abtropfen könnte.

Bei der Verwendung einer spindelförmigen Ablöseeinrichtung könnte eine Antriebseinrichtung eingesetzt werden, die möglichst außerhalb von Erstreckungsachsen des Kühlkörpers und der Ablöseeinrichtung angeordnet ist, so dass die Anströmung der ersten Fläche des Kühlkörpers nicht gestört wird. Als geeigneter Antrieb könnte beispielsweise ein Elektromotor mit einem optionalen geeigneten Getriebe ausgewählt werden, wobei sich die Erfindung jedoch nicht auf die Verwendung eines Elektromotors beschränkt. Vielmehr könnten gerade in einer Flugzeugumgebung auch pneumatische oder hydraulische Antriebseinrichtungen in Betracht kommen. Bei der Verwendung einer ebenen ersten Fläche könnte eine Linearführung einer Ablöseeinrichtung in Betracht kommen, die ein entsprechendes Linearführungsgetriebe an der Antriebseinrichtung erfordert. Gleichzeitig würde es sich empfehlen, zur Reduktion der Drehzahl und zum Erhöhen des Drehmoments einer spindelförmigen Ablösevorrichtung ein entsprechendes Getriebe an dem Motor anzuordnen.

Die Aufgabe wird weiterhin auch gelöst durch ein Verfahren zum Trocknen eines Gases, das im Wesentlichen die folgenden Schritte aufweist. Zunächst wird ein zu trocknender Gasstrom auf eine erste Fläche eines Kühlkörpers gerichtet, durch eine thermische Verbindung mit einer Wärmesenke wird der Kühlkörper gekühlt, um dabei den in dem Gas befindlichen Wasserdampf bzw. Wasseranteil zu vereisen, so dass er sich an der ersten Fläche akkumuliert. Gleichzeitig, anschließend oder alternierend wird eine Ablöseeinrichtung an der ersten Fläche bewegt, so dass das an der ersten Fläche akkumulierte Eis entfernt wird. Entferntes Eis wird optional in einem Reservoir gesammelt und weiterhin optional durch äußere Wärmeeinwirkung wieder geschmolzen. Aus dem Reservoir kann das dort angesammelte Eis ausfallen oder abgeführt werden, ebenso kann das optional durch Wärmeeinwirkung geschmolzene Eis ausgeleitet werden.

### KURZE BESCHREIBUNG DER ZEICHNUNGEN:

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbeziehungen. In den Figuren stehen weiterhin gleiche Bezugszeichen für gleiche oder ähnliche Objekte.
Fig. 1 zeigt eine schematische Ansicht eines ersten Ausführungsbeispiels der Vorrichtung zum Trocknen von Abgas.
Fig. 2 zeigt eine schematische Ansicht eines zweiten Ausführungsbeispiels der Vorrichtung zum Trocknen von Abgas.
Fig. 3a und 3b zeigen in einer schematischen Ansicht zwei Kühlmöglichkeiten für die Vorrichtung zum Trocknen von Abgas.
Fig. 4 zeigt eine schematische Ansicht des erfindungsgemäßen Verfahrens.
Fig. 5 zeigt ein Flugzeug mit mindestens einer Brennstoffzelle und mindestens einer Vorrichtung zum Trocknen des Abgases der Brennstoffzelle.

### DETAILLIERTE DARSTELLUNG EXEMPLARISCHER AUSFÜHRUNGSFORMEN:

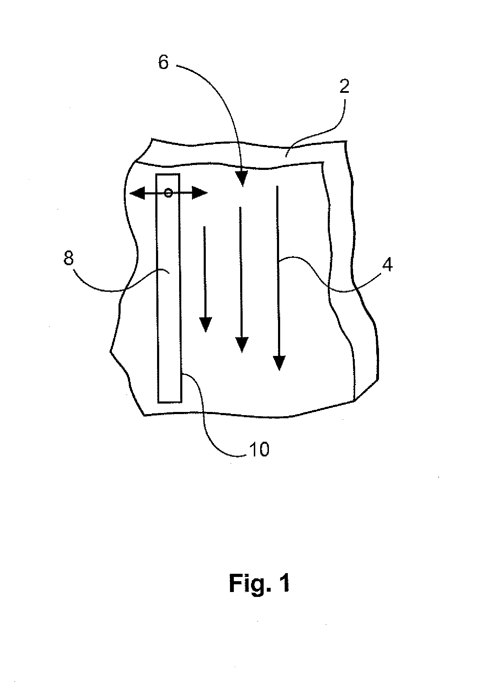

In Fig. 1 wird sehr schematisch das Grundprinzip der Vorrichtung zum Trocknen von Abgas eines Brennstoffzellensystems gezeigt. Ein Kühlkörper 2 mit einer beliebigen Form, die hier der Einfachheit nur abschnittsweise dargestellt wird, wird durch die Verbindung mit einer nicht sichtbaren Wärmesenke gekühlt. Die Temperatur des Kühlkörpers 2 beträgt weniger als 0°C, damit eine Gefrierung bzw. Sublimation von Wasserdampf in einem zu trocknenden Gas 4 erreicht werden kann.

Der Kühlkörper 2 weist eine erste Fläche 6 auf, an der das zu trocknende Gas 4 entlangstreicht. Das Gas 4 enthält einen bestimmten Anteil an Wasser bzw. Wasserdampf, den es abzuführen gilt. Durch das Entlangstreichen des Gases 4 auf der ersten Fläche 6 des Kühlkörpers 2 gefriert oder sublimiert das Wasser und sammelt sich als eine Eisschicht auf der ersten Fläche 6 an. Die Ansammlung von Eis kann nicht unendlich durchgeführt werden, daher wird eine Ablöseeinrichtung 8 eingesetzt, die relativ zu dem Kühlkörper 2 bewegbar gelagert ist. Exemplarisch weist die Ablöseeinrichtung 8 eine Schabekante 10 auf, die mit der ersten Fläche 6 in Berührung steht. Durch Entlangstreichen der Schabekante 10 auf der ersten Fläche 6 wird das Eis abgekratzt. Durch kontinuierliches Entlangstreichen der Ablöseeinrichtung 8 auf der ersten Fläche 6 kann diese stets von Eis befreit bleiben, so dass stets eine ideale Kühlwirkung auf den Wasseranteil des Gases 4 einwirken kann, so dass eine kontinuierliche ideale Entfeuchtung des Gases 4 durchgeführt werden kann.

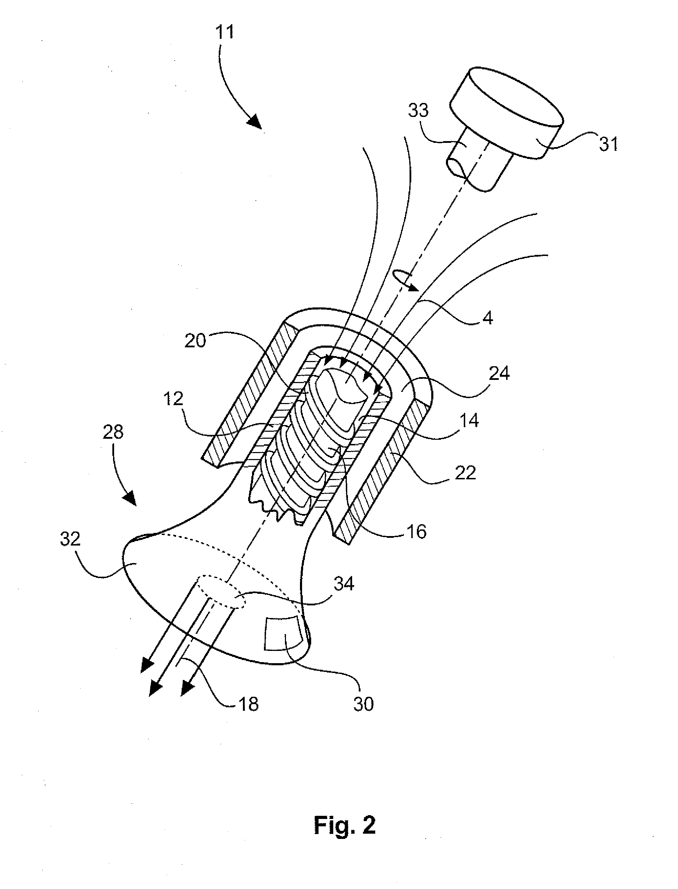

In Fig. 2 wird ein konkreteres Ausführungsbeispiel der Vorrichtung 11 gezeigt. Hier ist ein Kühlkörper 12 ist als Hohlzylinder ausgeführt, der von dem zu trocknenden Gas 4 durchströmt wird. Die als Innenfläche des Kühlkörpers ausgeführte erste Fläche 14 wird dabei bei ausreichender Kühlung mit Eis bedeckt und das Gas 4 wird beim Durchströmen des Kühlkörpers 12 getrocknet. Zum Entfernen des Eisbelags an der ersten Fläche 14 wird eine Ablöseeinrichtung 16 eingesetzt, die auf einer Achse 18 rotierbar gelagert ist, wobei die Achse 18 der Erstreckungsachse des Kühlkörpers 12 entspricht und demnach konzentrisch hierzu angeordnet ist. Der Antrieb der Ablöseeinrichtung 16 wird durch eine schematisch dargestellte Antriebseinrichtung 31 realisiert, die auf einer Welle 33 mit der Ablöseeinrichtung 16 verbunden ist, wobei sich die Welle 33 über eine größere Höhe erstreckt als der Kühlkörper 12, so dass ein Einströmen des zu trocknenden Gases 4 erlaubt wird.

Die Ablöseeinrichtung 16 weist dabei eine spiral- oder helixförmig verlaufende Kante 20 auf, die kontinuierlich entlang der ersten Fläche 14 des Kühlkörpers 12 bei Rotation der Ablöseeinrichtung 16 schabt. Dadurch wird eine kontinuierliche Ablösung von Eis von der ersten Fläche 14 durchgeführt.

Bevorzugt ist die Ablöseeinrichtung 16 mit einer derart groben Wendelung ausgerüstet, dass gleichzeitig ein leichtes Durchströmen des Gases 4 durch die Vorrichtung erlaubt wird, die Eisablösung aber stets gewährleistet bleiben kann.

Der hohlzylindrisch geformte Kühlkörper 12 wird in dem gezeigten Ausführungsbeispiel von einem weiteren zylindrisch geformten Körper 22 umgeben, der einen Spalt 24 zu dem Kühlkörper 12 definiert. Durch diesen Spalt könnte ein Kältemittel strömen, das durch das Entlangstreichen auf einer zweiten Fläche 26 des Kühlkörpers 12 eine Kühlung hervorruft, durch die der Wasseranteil des Gases 4 an der ersten Fläche 14 gefriert.

Ein unterer Bereich 28 des Kühlkörpers 12 weist eine sich nach außen ausdehnende Form auf, die etwa als Reservoir genügend Raum für akkumuliertes und von der ersten Fläche 14 abgelöstes Eis bereitstellt. Optional kann eine entsprechende Öffnung 30 vorgesehen werden, durch die das Eis oder durch äußere Wärmeeinwirkung geschmolzenes Eis in Form von Schmelzwasser abgeführt wird. Der auswärts geformte Bereich 28 des Kühlkörpers 12 könnte mit einem Deckel 32 ausgerüstet sein, der in der Verlängerung der Achse 18 einen Ausschnitt 34 aufweist, der ein ungehindertes Ausströmen des Gases 4 erlaubt.

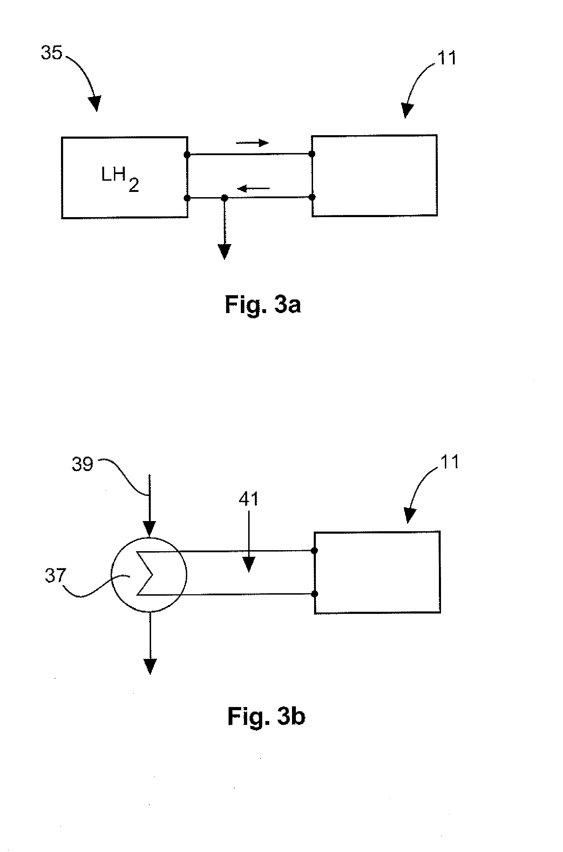

In Fig. 3a wird schematisch eine Vorrichtung 11 gezeigt, die mit einem kryogenen Wasserstofftank 35 gefüllt mit flüssigem Wasserstoff in Verbindung steht. Flüssiger Wasserstoff tritt in den Spalt 24 ein, kühlt den Kühlkörper 12 und wird wieder in den Tank 35 geleitet oder der Verwendung in einer Brennstoffzelle oder dergleichen zugeführt.

In Fig. 3b wird schematisch ein Wärmetauscher 37 gezeigt, der mit einer Umgebungsluft 39 gekühlt wird. Ein separater Kühlkreislauf 41 verbindet den Wärmetauscher 37 und die Vorrichtung, so dass ein direktes Einleiten von Umgebungsluft vermieden werden kann. Die Umgebungsluft 39 kann nach Verwendung in dem Wärmetauscher 37 wieder ausgeleitet werden. Alternativ dazu kann der Spalt 24 in der Vorrichtung auch direkt von Umgebungsluft durchströmt werden.

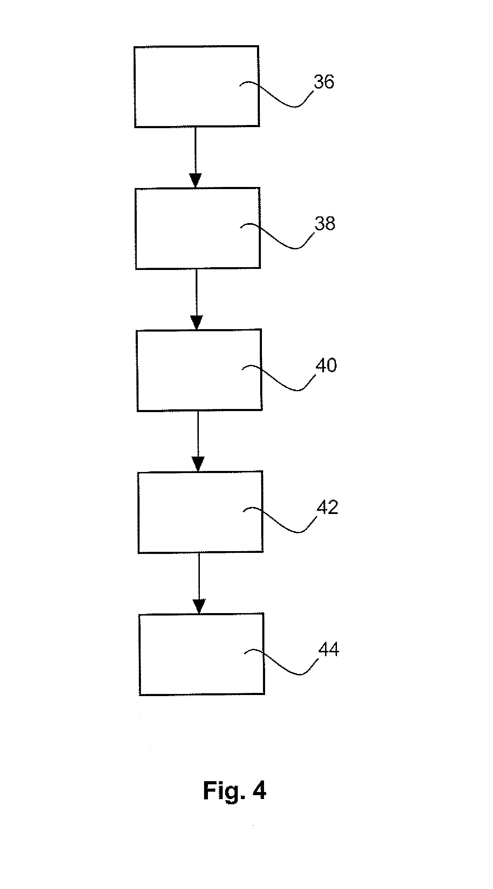

Weiterhin zeigt Fig. 4 die wesentlichen Schritte des erfindungsgemäßen Verfahrens. Zunächst wird eine erste Fläche eines Kühlkörpers mit einem zu trocknenden Gasstrom beaufschlagt 36, durch eine thermische Verbindung mit einer Wärmesenke wird der Kühlkörper gekühlt 38, um dabei den in dem Gas befindlichen Wasserdampf bzw. Wasseranteil zu vereisen, so dass das Eis an der ersten Fläche akkumuliert wird. Gleichzeitig, anschließend oder alternierend wird eine Ablöseeinrichtung an der ersten Fläche bewegt 40, so dass das an der ersten Fläche akkumulierte Eis entfernt wird. Entferntes Eis wird optional in einem Reservoir gesammelt und weiterhin optional durch äußere Wärmeeinwirkung wieder geschmolzen 42. Aus dem Reservoir kann das dort angesammelte Eis ausfallen oder abgeführt werden 44, ebenso kann das optional durch Wärmeeinwirkung geschmolzene Eis ausgeleitet werden.

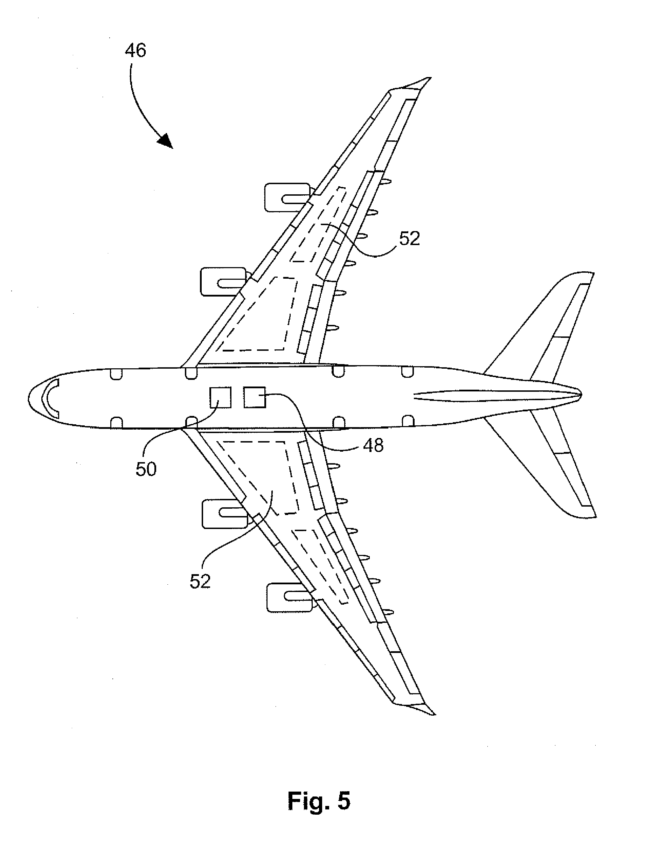

Schließlich wird in Fig. 5 ein Flugzeug 46 gezeigt, welches mit mindestens einem Brennstoffzellensystem 48 ausgerüstet ist, das ein Wasserdampf beinhaltendes Abgas durch eine Vorrichtung 50 getrocknet zur Inertisierung von Kraftstofftanks 52 in diese Kraftstofftanks 52 leitet.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### BEZUGSZEICHEN:

- 2: Kühlkörper
- 4: Gas
- 6: erste Fläche
- 8: Ablöseeinrichtung
- 10: Schabekante
- 11: Vorrichtung
- 12: Kühlkörper
- 14: erste Fläche
- 16: Ablöseeinrichtung
- 18: Achse
- 20: Kante
- 22: Körper
- 24: Spalt
- 26: zweite Fläche
- 28: auswärts geformter Bereich
- 30: Öffnung
- 31: Antriebseinrichtung
- 32: Deckel
- 33: Welle
- 34: Ausschnitt
- 35: kryogener Wasserstofftank
- 36: Beaufschlagen mit Gasstrom
- 37: Wärmetauscher
- 38: Kühlen Kühlkörper
- 39: Umgebungsluft
- 40: erste Fläche
- 41: separater Kühlkreislauf
- 42: Schmelzen
- 44: Abführen
- 46: Flugzeug
- 48: Brennstoffzellensystem
- 50: Vorrichtung
- 52: Kraftstofftank

## Patentansprüche

1. Brennstoffzellensystem mit einer Vorrichtung (11, 50) zum Trocknen von Abgas des Brennstoffzellensystems, aufweisend
- mindestens einen Kühlkörper (2, 12) mit mindestens einer ersten Fläche (6, 14) und
- mindestens eine Ablöseeinrichtung (8, 16),
wobei der Kühlkörper (2, 12) dazu eingerichtet ist, mit einer Wärmesenke thermisch verbunden zu werden und mit dem zu trocknenden vorbeistreichenden Gas in Berührung zu geraten,
wobei die Ablöseeinrichtung (8, 16) relativ zu der ersten Fläche (6, 14) bewegbar gelagert ist und dazu eingerichtet ist, auf der ersten Fläche (6, 14) gefrorenes Wasser abzulösen.

2. Brennstoffzellensystem nach Anspruch 1,
wobei die Ablöseeinrichtung (8, 16) eine Kante (10, 20) zum Abschaben von Eis der ersten Fläche (6, 14) aufweist.

3. Brennstoffzellensystem nach Anspruch 1 oder 2, ferner aufweisend eine mit der Ablöseeinrichtung (8, 16) gekoppelte Antriebseinrichtung (31).

4. Brennstoffzellensystem nach einem der vorhergehenden Ansprüche, wobei der Kühlkörper (2, 12) ein Hohlkörper ist, wobei die erste Fläche (6, 14) eine Innenfläche des Kühlkörpers (2, 12) ist.

5. Brennstoffzellensystem nach einem der Ansprüche 1 bis 3, wobei der Kühlkörper (2, 12) zumindest abschnittsweise als Hohlzylinder ausgeführt ist, wobei die erste Fläche (6, 14) die innere Mantelfläche des Kühlkörpers (2, 12) ist.

6. Brennstoffzellensystem nach Anspruch 4 oder 5, wobei die Ablöseeinrichtung (8, 16) eine Spindelform aufweist und auf einer deren äußere Spindelkanten (20) mit der Innenfläche des Kühlkörpers (14) in Berührung stehen und rotierbar an einer zum Kühlkörper (14) festen Achse (18) gelagert ist.

7. Brennstoffzellensystem nach einem der Ansprüche 4 bis 6, ferner aufweisend einen den Kühlkörper (2, 14) unter Bildung eines Spalts (24) zum Durchströmen eines Fluids umschließenden Hohlkörper.

8. Brennstoffzellensystem nach einem der Ansprüche 4 bis 7, wobei der Kühlkörper (12) an mindestens einem Ende einen sich aufweitenden Bereich (28) aufweist.

9. Brennstoffzellensystem nach einem der Ansprüche 1 bis 8,
wobei Wasserstoff aus einem kryogenen Wasserstofftank (35) als Wärmesenke verwendet wird.

10. Verfahren zum Trocknen von Abgas eines Brennstoffzellensystems, aufweisend die Schritte:
- Ansammeln von Eis an einer ersten Fläche (6, 14) eines Kühlkörpers (2, 12) aus der Feuchtigkeit des Abgases durch Beaufschlagen (36) einer ersten Fläche (6, 14) eines Kühlkörpers (2, 12) mit Abgas des Brennstoffzellensystems,
- Kühlen (38) des Kühlkörpers (2, 12),
- Ablösen des Eises von der ersten Fläche (6, 14) durch Bewegen eine Ablöseeinrichtung (8, 16) an der ersten Fläche (6, 14).

11. Verfahren nach Anspruch 10, ferner aufweisend den Schritt:
- Abführen (44) des abgelösten Eises.

12. Verfahren nach Anspruch 10 oder 11, ferner aufweisend den Schritt:
- Schmelzen (42) des Eises und Ausleiten von Schmelzwasser.

13. Flugzeug (46) mit mindestens einem Brennstoffzellensystem (48), das derart mit mindestens einem Kraftstofftank (52) verbunden ist, dass Abgas des Brennstoffzellensystems (48) den Kraftstofftank (52) inertisiert, sowie mit mindestens einer Vorrichtung (11, 50) zum Trocknen des Abgases des Brennstoffzellensystems (48), aufweisend
- mindestens einen Kühlkörper (2, 12) mit mindestens einer ersten Fläche (40) und
- mindestens eine Ablöseeinrichtung (8, 16),
wobei der Kühlkörper (2, 12) dazu eingerichtet ist, mit einer Wärmesenke thermisch verbunden zu werden und mit dem vorbeistreichenden zu trocknenden Abgas des Brennstoffzellensystems in Berührung zu geraten,
- wobei die Ablöseeinrichtung (8, 16) relativ zu der ersten Fläche (6, 14) bewegbar gelagert ist und dazu eingerichtet ist, auf der ersten Fläche (6, 14) gefrorenes Wasser abzulösen.

14. Flugzeug (46) nach Anspruch 13, ferner aufweisend einen kryogenen Wasserstofftank (35), wobei die Wärmesenke in Form von kryogenem Wasserstoff bereitgestellt wird.

## Claims

1. Fuel cell system having an apparatus (11, 50) for drying of exhaust gas of the fuel cell system, comprising
- at least one cooling element (2, 12) with at least one first surface (6, 14) and
- at least one detachment device (8, 16),
wherein the cooling element (2, 12) is designed to be thermally connected to a heat sink and to come into contact with the gas to be dried, which gas is flowing past,
wherein the detachment device (8, 16) is movably held relative to the first surface (6, 14) and is designed to detach frozen water from the first surface (6, 14).

2. The fuel cell system of claim 1,
wherein the detachment device (8, 16) comprises an edge (10, 20) for scraping off ice from the first surface (6, 14).

3. The fuel cell system of claim 1 or 2, further comprising a drive device (31) coupled to the detachment device (8, 16).

4. The fuel cell system of any one of the preceding claims, wherein the cooling element (2, 12) is a hollow body, wherein the first surface (6, 14) is an inside surface of the cooling element (2, 12).

5. The fuel cell system of any one of claims 1 to 3, wherein the cooling element (2, 12) is designed as a hollow cylinder at least in some sections, wherein the first surface (6, 14) is the inner lateral surface of the cooling element (2, 12).

6. The fuel cell system of claim 4 or 5, wherein the detachment device (8, 16) is spindle-shaped, with one of its outer spindle edges (20) being in contact with the inside surface of the cooling element (14), and is rotatably held on an axis (18) that is rigid relative to the cooling element (14).

7. The fuel cell system of any one of claims 4 to 6, further comprising a hollow body that encloses the cooling element (2, 14) so as to form a gap (24) for a fluid to flow through.

8. The fuel cell system of any one of claims 4 to 7, wherein the cooling element (12) on at least one end comprises an opening-out region (28).

9. The fuel cell system of any one of claims 1 to 8,
wherein the heat sink is provided in the form of hydrogen from a cryogenic hydrogen tank (35).

10. A method for drying of exhaust gas of a fuel cell system, comprising the steps of:
- accumulating ice on a first surface (6, 14) of a cooling element (2, 12) through humidity of the exhaust gas by subjecting (36) the first surface (6, 14) of the cooling element (2, 12) to the exhaust gas of the fuel cell system,
- cooling (38) the cooling element (2, 12),
- detaching of the ice from the first surface (6, 14) by moving a detachment device (8, 16) on the first surface (6, 14).

11. The method of claim 10, further comprising the step of:
- discharging (44) the detached ice.

12. The method of claim 10 or 11, further comprising the step of:
- melting (42) the ice and discharging meltwater.

13. An aircraft (46) with at least one fuel cell system (48) that is connected with at least one fuel tank (52) in such a manner that exhaust gas from the fuel cell system (48) renders the fuel tank (52) inert, and with at least one apparatus (11, 50) for drying the exhaust gas of the fuel cell system (48), comprising
- at least one cooling element (2, 12) with at least one first surface (40) and
- at least one detachment device (8, 16),
wherein the cooling element (2, 12) is designed to be thermally connected to a heat sink and to come into contact with the exhaust of the fuel cell system flowing past, which exhaust gas is to be dried,
- wherein the detachment device (8, 16) is movably held relative to the first surface (6, 14) and is equipped to detach frozen water from the first surface (6, 14).

14. The aircraft (46) of claim 13, further comprising a cryogenic hydrogen tank (35), wherein the heat sink is provided in the form of cryogenic hydrogen.

## Revendications

1. Système de pile à combustible comprenant un dispositif (11, 50) de séchage du gaz d'échappement du système de pile à combustible, présentant :
- au moins un corps de refroidissement (2, 12) comportant au moins une première surface (6, 14) et
- au moins un équipement de séparation (8, 16),
dans lequel le corps de refroidissement (2, 12) est adapté pour être relié thermiquement à un dissipateur thermique et à arriver en contact avec le gaz passant devant qui doit être séché,
dans lequel l'équipement de séparation (8, 16) est monté mobile par rapport à la première surface (6, 14) et adapté pour séparer l'eau gelée sur la première surface (6, 14).

2. Système de pile à combustible selon la revendication 1,
dans lequel l'équipement de séparation (8, 16) présente une arête (10, 20) pour gratter la glace de la première surface (6, 14).

3. Système de pile à combustible selon la revendication 1 ou 2, présentant en outre un mécanisme d'entraînement (31) couplé à l'équipement de séparation (8, 16).

4. Système de pile à combustible selon une des revendications précédentes, dans lequel le corps de refroidissement (2, 12) est un corps creux, la première surface (6, 14) étant une surface intérieure du corps de refroidissement (2, 12).

5. Système de pile à combustible selon une des revendications 1 à 3, dans lequel le corps de refroidissement (2, 12) est réalisé au moins par sections sous la forme d'un cylindre creux, la première surface (6, 14) étant l'enveloppe intérieure du corps de refroidissement (2, 12).

6. Système de pile à combustible selon la revendication 4 ou 5, dans lequel l'équipement de séparation (8, 16) présente une forme de broche et est en contact, sur une de ses arêtes extérieures (20) de broche, avec la surface intérieure du corps de refroidissement (14) et est monté rotatif sur un axe fixe (18) par rapport au corps de refroidissement (14).

7. Système de pile à combustible selon une des revendications 4 à 6, présentant en outre un corps creux entourant le corps de refroidissement (2, 14) en formant une fente (24) pour le passage d'un fluide.

8. Système de pile à combustible selon une des revendications 4 à 7, dans lequel le corps de refroidissement (12) présente une zone (28) qui s'évase sur au moins une extrémité.

9. Système de pile à combustible selon une des revendications 1 à 8,
dans lequel de l'hydrogène provenant d'un réservoir d'hydrogène cryogénique (35) est utilisé comme dissipateur thermique.

10. Procédé de séchage du gaz d'échappement d'un système de pile à combustible, présentant les étapes consistant à :
- accumuler de la glace sur une première surface (6, 14) d'un corps de refroidissement (2, 12) à partir de l'humidité du gaz d'échappement en alimentant (36) en gaz d'échappement du système de pile à combustible une première surface (6, 14) d'un corps de refroidissement (2, 12),
- refroidir (38) le corps de refroidissement (2, 12),
- séparer la glace de la première surface (6, 14) en déplaçant un équipement de séparation (8, 16) sur la première surface (6, 14).

11. Procédé selon la revendication 10, présentant en outre l'étape consistant à :
- évacuer (44) la glace séparée.

12. Procédé selon la revendication 10 ou 11, présentant en outre l'étape consistant à :
- faire fonde (42) la glace et rediriger l'eau de la fonte.

13. Aéronef (46) comportant au moins un système de pile à combustible (48), qui est relié à au moins un réservoir de combustible (52) de telle sorte que le gaz d'échappement du système de pile à combustible (48) rend le réservoir de combustible (52) inerte, ainsi qu'au moins un dispositif (11, 50) de séchage du gaz d'échappement du système de pile à combustible (48), présentant :
- au moins un corps de refroidissement (2, 12) comportant au moins une première surface (40) et
- au moins un équipement de séparation (8, 16),
dans lequel le corps de refroidissement (2, 12) est adapté à être relié thermiquement à un dissipateur thermique et à arriver en contact avec le gaz d'échappement du système de pile à combustible passant devant qui doit être séché,
- l'équipement de séparation (8, 16) étant monté mobile par rapport à la première surface (6, 14) et adapté pour séparer l'eau gelée sur la première surface (6, 14).

14. Aéronef (46) selon la revendication 13, présentant en outre un réservoir d'hydrogène cryogénique (35), dans lequel le dissipateur thermique est fourni sous forme d'hydrogène cryogénique.
